Europäisches Patentamt

European Patent Office

Office européen des brevets

(19)

(11) Veröffentlichungsnummer: **0 125 427**
**B1**

(12) **EUROPÄISCHE PATENTSCHRIFT**

(45) Veröffentlichungstag der Patentschrift:
15.10.86

(51) Int. Cl.⁴: **A 01 D 90/02,** A 01 D 89/00

(21) Anmeldenummer: **84102946.5**

(22) Anmeldetag: **16.03.84**

(54) **Trommelförderer.**

(30) Priorität: **11.05.83 DE 3317302**

(43) Veröffentlichungstag der Anmeldung:
**21.11.84 Patentblatt 84/47**

(45) Bekanntmachung des Hinweises auf die Patenterteilung:
**15.10.86 Patentblatt 86/42**

(84) Benannte Vertragsstaaten:
**AT CH LI NL**

(56) Entgegenhaltungen:
**DE-A-2 006 923**
**SU-A-626 722**

(73) Patentinhaber: **Klöckner- Humboldt- Deutz AG
Zweigniederlassung Fahr, D-7702 Gottmadingen
(DE)**

(72) Erfinder: **Schaible, Siegfried, Dipl.- Ing.,
Breslauerstrasse 15, D-7700 Singen (DE)**
Erfinder: **Bottlang, Erwin, Boelckestrasse 2, D-7760
Radolfzell (DE)**
Erfinder: **Schweizer, Robert, Feldbergstr. 14,
D-7701 Hilzingen- Riedheim (DE)**
Erfinder: **Silber, Wilhelm, Petersburg 10, D-7702
Gottmadingen 3 (DE)**

(74) Vertreter: **Haft, Berngruber, Czybulka, Hans-
Sachs- Strasse 5, D-8000 München 5 (DE)**

## Beschreibung

Die vorliegende Erfindung betrifft einen Trommelförderer, insbesondere für Selbstlade-Erntewagen, gemäß dem Oberbegriff des Patentanspruches 1.

Derartige Selbstlade-Erntewagen eignen sich insbesondere für landwirtschaftliche betriebe mit starkem Futterbauanteil und zwar sowohl für die Heubergung, die Strohbergung, das tägliche Futterholen, die Saft-Silage und die Anwelk-Silage. Das zu transportierende Futter wird dabei üblicherweise von einer Pickup-Vorrichtung aufgenommen und einem Förderkanal zugeführt, wobei es dann von dem Trommelförderer erfaßt wird und in das Innere des Ladewagens befördert wird.

Ein derartiger Trommelförderer weist eine Vielzahl von parallel zueinander angeordneten und drehbar gelagerten Rechenrohren auf, deren jedes mit einer Vielzahl von parallel zueinander und im Abstand voneinander angeordneten Förderzinken versehen ist, die in den Förderkanal beim Umlauf eingreifen und zum Transport des Futterstromes in das Innere des Ladewagens dienen. Dabei wird üblicherweise das dem Förderkanal zugeführte Ladegut von den Förderzinken in gleich große Portionen dosiert und im gleichmäßigen Fließverfahren in den Laderaum des Erntewagens geführt.

Die Förderzinken sind üblicherweise an den Rechenrohren angeschweißt, so daß dieses aus weichem und schweißbarem Material bestehen muß. Dies bedingt jedoch einen schnellen Verschleiß an den Lagerstellen, so daß bisher bei entsprechender Abnutzung der Rechenrohre an den Lagerstellen der gesamte Förderrechen ausgetauscht werden mußte. Der Austausch eines kompletten Förderrechens ist jedoch teuer und umständlich.

Aus der DE-A- 20 06 923 ist eine Aufnahmetrommel für gemähtes halm- oder blattartiges Erntegut bekannt, wobei zur Vergrößerung der Arbeitsbreite ein jeder Zinkenträger aus verdrehfest miteinander verbundenen Einzelstücken zu seiner Gesamtlänge zusammengesetzt ist und die Verbindungsstellen der einzelnen Stücke aller Zinkenträger jeweils in einer gemeinsamen Radialebene liegen und in dieser jeweils für sich drehbar gelagert und an der zentralen Welle abgestützt sind. An den Verbindungsstellen zwischen den Zinkenträger-Einzelstücken sind dabei geteilte Lager vorgesehen, die jeweils mit einer inneren Lagerschale an einem auf der zentralen Wellen frei drehbar gelagerten Abstützorgan befestigt sind. Das Abstützorgan ist dabei entsprechend der Anzahl von Zinkenträgern als Stützkreuz oder Stützstern ausgebildet, dessen Arme sich von einer auf der zentralen Welle gelagerten Nabe radial nach außen erstrecken und an ihren Enden die inneren Lagerschalen tragen. In axialer Ebene sind in den geteilten Lagern auch noch in einer mittleren radialen Ebene geteilte Lagerbüchsen für eine Gleitlagerung der Wellenstücke vorgesehen.

Mit dieser bekannten Anordnung ist es zwar möglich, die Arbeitsbreite von derartigen Aufnahmetrommeln, z.B. bei Anwendung als Vorsatzgerät für Mähdrescher, zu vergrößern, ohne daß dabei der schnelle Verschleiß an den Lagerstellen der beiden Enden der Wellen verringert wird, so daß bei entsprechender Abnutzung der Rechenrohre an den Lagerstellen der gesamte Förderrechen ausgetauscht werden muß.

Aufgabe der vorliegenden Erfindung ist es, einen Trommelförderer zu schaffen, bei dem die Rechenrohre der Förderrechen vor Verschleiß geschützt sind, so daß diese nicht mehr ausgetauscht werden müssen.

Ausgehend von einem Trommelförderer der eingangs näher genannten Art, erfolgt die Lösung dieser Aufgabe mit den im kennzeichnenden Teil des Anspruchs 1 angegebenen Merkmalen.

Mit der Erfindung wird der Vorteil erzielt, daß nunmehr durch das Gleiten der Lagerbuchse im Lagergehäuse am Rechenrohr selbst kein Verschleiß mehr auftritt. Das Rechenrohr kann damit weiter wie bisher aus weichem und schweißbarem Material bestehen, da nunmehr der Verschleiß am Lagergehäuse auftritt, welches wesentlich billiger als der ganze Förderrechen ausgetauscht werden kann.

Vorteilhafterweise ist das Lagergehäuse und die Lagerbuchse jeweils mittig geteilt, so daß ein leichtes Demontieren und Ersetzen ermöglicht wird.

Um die Lagerbuchse drehfest mit dem Rechenrohr zu verbinden, kann sie entlang mindestens eines Randes mit einem Profil versehen sein, das in einer neben dem Lager angeordneten, das Rechenrohr umgebenden und an ihm befestigten mit einem komplementären Profil versehenen Scheibe eingreift, so daß sie gegen eine Relativverdrehung zum Rechenrohr gesichert ist.

Dieses Profil kann z.B. ein Zahnprofil sein, das sich über den gesamten Rand der Lagerbuchse und der Sicherungsscheibe erstreckt. Bei einem anderen Ausführungsbeispiel kann das Profil auch aus einer Vielzahl von halbkreisförmigen Aussparungen an der Lagerbuchse bestehen, die mit entsprechenden halbkreisförmigen Vorsprüngen entlang des Randes der Scheibe zusammenwirken.

Es ist fernerhin auch möglich, daß das Profil der Lagerbuchse aus zwei sich diametral gegenüberliegenden Vorsprüngen besteht, die an beiden Rändern der Lagerbuchse vorgesehen sind und daß das Profil der Sicherungsscheibe aus entsprechenden Aussparungen besteht, in die die Vorsprünge eingreifen.

Weitere vorteilhafte Ausführungsformen von erfindungsgemäßen Lagerbuchsen, Lagerschalen und Sicherungsscheiben gehen aus der nachfolgenden Beschreibung bevorzugter Ausführungsbeispiele hervor, anhand derer die Erfindung nunmehr näher erläutert wird.

Es zeigen:

Figur 1 eine schematische Draufsicht auf einen Trommelförderer;

Figur 2 einen Querschnitt durch eine der Lagerstellen;

Figur 3 eine Draufsicht auf diese Lagerstellen;

Figur 4 einen Querschnitt durch eine andere Lagerstelle;

Figur 5 eine Draufsicht auf diese Lagerstelle; und

Figuren 6 bis 9 andere Ausführungsbeispiele von erfindungsgemäßen Lagerstellen.

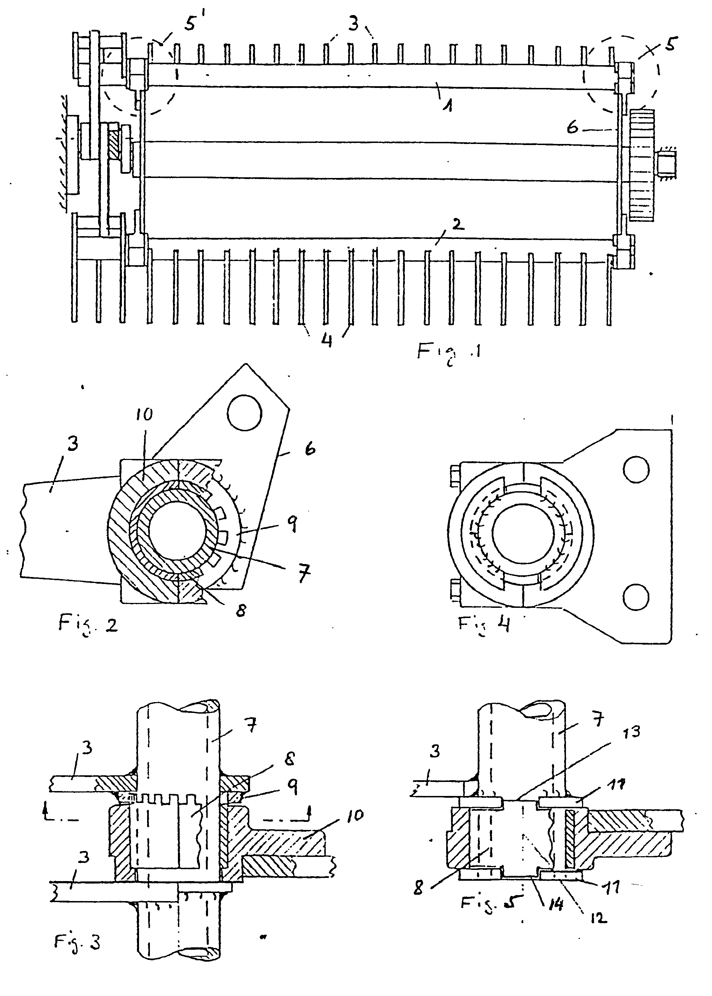

Bei dem in Figur 1 schematisch dargestellen Trommelförderer sind zwei Rechenrohre 1, 2 dargestellt, mit daran befestigten Förderzinken 3, 4, die z.B. angeschweißt sind. Die Förderrechen sind an ihren beiden Enden drehbar an einer Trommelhalterung 6 gelagert, wie es durch die beiden gestrichelten Kreise 5, 5' angedeutet ist. Durch eine nicht näher dargestellte, links in Figur 1 angedeutete Vorrichtung können die Förderrechen z.B. eine hin-und hergehende Bewegung ausführen um so das Futter in Richtung des Ladewagens zu befördern.

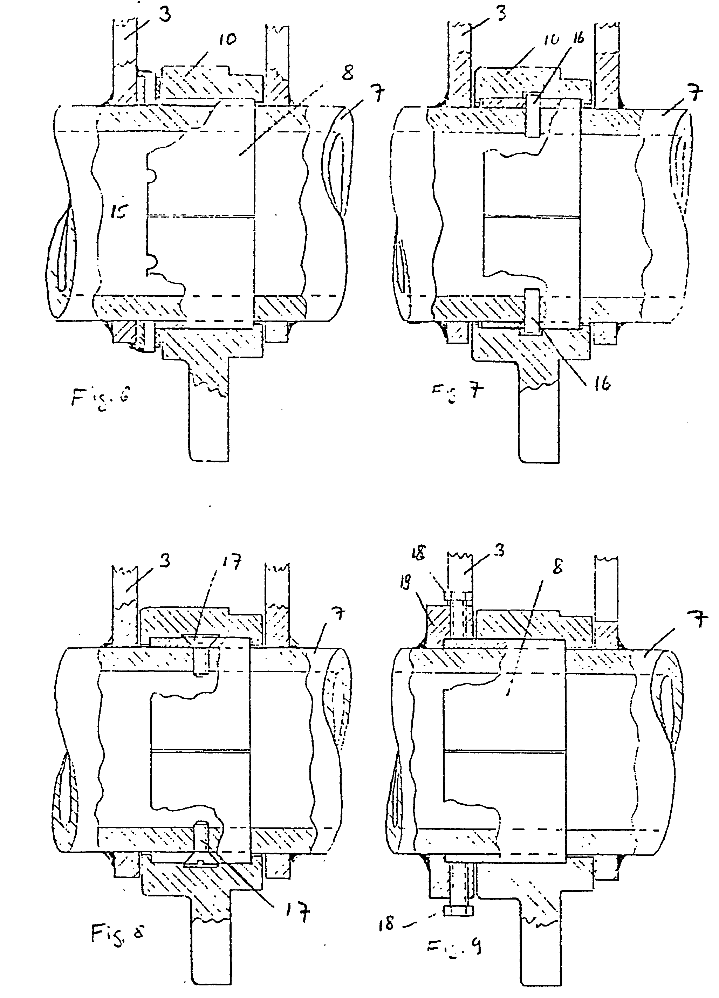

Figur 2 zeigt in vergrößerter Ansicht ein erstes Ausführungsbeispiel einer erfindungsgemäßen Lagerstelle, wobei mit 7 das Rechenrohr bezeichnet ist. Das Rechenrohr ist von einer Lagebuchse 8 umgeben, die drehfest mit ihm verbunden ist und innerhalb eines Lagergehäuses 10 angeordnet ist, das mit der Halterung 6 fest verbunden ist. Wie insbesondere Figur 3 erkennen läßt, ist bei diesem Ausführungsbeispiel sowohl die Lagerbuchse 8 als auch die Lagergehäuse 10 mittig geteilt, so daß ein leichtes Einsetzen möglich ist. Um die Lagerbuchse 8 mit dem Rechenrohr 7 drehfest zu verbinden, ist die Lagerbuchse z.B. an einem Rand mit einem zahnförmigen Profil versehen, das in eine neben der Lagerstelle angeordnete und mit dem Rechenrohr 7 fest verbundene Sicherungsscheibe 9 eingreift, das mit einem komplementären zahnförmigen Profil versehen ist. Dadurch wird gewährleistet, daß sich die Lagerbuchse 8 mit dem Rechenrohr 7 dreht, so daß ein Verschleiß nur noch zwischen Lagerbuchse 8 und Lagergehäuse 10 auftreten kann. Die Lagergehäuse 10 ist fest mit der Halterung 6 für die Förderrechen verbunden.

Die Figuren 4 und 5 zeigen ein zweites Ausführungsbeispiel einer erfindungsgemäßen Lagerstelle. Hierbei weist die Lagerbuchse 8 die wieder entlang einer Linie 12 mittig geteilt ist, an ihren beiden Rändern jeweils zwei sich diametral gegenüberliegende Vorsprünge 13, 14 auf, die in entsprechende Aussparungen der hier beidseitig ausgebildeten Sicherungsscheibe 11 eingreifen, so daß, da die Sicherungsscheibe 11 drehfest mit dem Rechenrohr 7 verbunden ist, die Lagerbuchse 8 mitgenommen wird. Auch hier erfolgt der Verschleiß ausschließlich an den Reibungsstellen zwischen Lagerbuchse 8 und Lagergehäuse 10.

Bei dem in Figur 6 dargestellen Ausführungsbeispiel einer erfindungsgemäßen Lagerung für den Förderrechen, ist die Lagerbuchse 8 entlang eines Randes mit im Abstand voneinander angeordneten halbkreisförmigen Aussparungen 15 versehen, die in entsprechende halbkreisförmige Aussparungen der Sicherungsscheibe eingreifen, so daß auch hier eine drehfeste Lagerung der Lagerbuchse am Rechenrohr 7 erfolgt.

Bei dem in Figur 7 dargestellten Ausführungsbeispiel einer Lagerstelle ist die Lagerbuchse 8 am Rechenrohr 7 über Kerbstifte 16 bzw. angeschweißte Bolzen 16 verbunden, die in entsprechende Öffnungen im Rechenrohr 7 eingreifen. Bei dem in Figur 8 dargestellten Ausführungsbeispiel ist die Lagerbuchse 8 über Senkschrauben 17 mit dem Rechenrohr 7 verbunden, wobei diese Senkschrauben ebenfalls in hier mit einem Gewinde versehene Öffnungen des Rechenrohrs 7 eingreifen. Zwar entfällt bei diesen beiden letztgenannten Ausführungsbeispielen die Sicherungsscheibe, jedoch ist hierbei die Belastbarkeit des Rechenrohres an den Lagerstellen auf Verdrehung und Biegung aufgrund der Bohrungen geringer.

Figur 9 zeigt ein Ausführungsbeispiel, bei dem die Lagerbuchse 8 am Rechenrohr 7 teilweise unter einen angeschweißten Ring 19 geschoben und mit einem Gewindestift 18 z.B. mit Innensechskant und einer Ringschneide festgeschraubt ist.

Eine weitere Möglichkeit besteht darin, die Lagerbuchse an den Enden auszuklinken und nach innen zu biegen, wobei sie dann in eigens dafür vorgesehene Nuten sich abstützen.

In jedem Fall werden die Lagerbuchsen am Außenmantel des Rechenrohres drehfest angeordnet, so daß die Drehung zwischen dem Außendurchmesser der Lagerbuchse und der Innenfläche des Lagergehäuses stattfindet. Tritt an diesen Stellen Verschleiß auf, so sind die Lager leicht und preiswert auszuwechseln, wohingegen die Förderrechen keinen Verschleiß an den Lagerstellen mehr aufweisen und demzufolge auch nicht mehr ausgetauscht werden müssen. Lagerbuchse und Lagergehäuse sind aus einem härtbaren Material und weisen demzufolge eine längere Lebensdauer auf als die aus weichem Material bestehenden herkömmlich gelagerten Enden der Rechenrohre.

## Patentansprüche

1. Trommelförderer, insbesondere für Selbstlade-Erntewagen, der an einem der Aufnahme von Halmgut dienenden Förderkanal vorgesehen ist und eine Vielzahl von Förderrechen aufweist, deren jeder aus einem Rechenrohr (1, 2, 7) und einer Vielzahl von daran fest angeordneten Förderzinken (3, 4) besteht, wobei das Rechenrohr (1, 2, 7) an seinen beiden Enden drehbar in einer Halterung (6) mittels eines mittig geteilten Gleitlagers gelagert ist, das aus einer Lagerbuchse (8) besteht, die am Ende des Rechenrohrs (1, 2, 7) angeordnet ist und sich mit ihm dreht und aus einem Lagergehäuse (10) besteht, das fest mit der Halterung (6) verbunden ist, dadurch gekennzeichnet, daß die Lagerbuchse (8) entlang mindestens eines Randes mit einem Profil versehen ist, und daß neben der Lagerstelle eine mit dem Rechenrohr (7) fest verbundene Sicherungsscheibe (9) vorgesehen ist, die ein zum Profil der Lagerbuchse (8) komplementäres Profil aufweist, so daß eine drehfeste Verbindung der Lagerbuchse (8) über die Sicherungsscheibe (9) mit dem Rechenrohr (7) erfolgt.

2. Trommelförderer nach Anspruch 1, dadurch gekennzeichnet, daß die Profile der Lagerbuchse (8) und der Sicherungsscheibe (9) Zahnprofile sind, die ineinandergreifen.

3. Trommelförderer nach Anspruch 1, dadurch gekennzeichnet, daß die Lagerbuchse (8) an beiden Rändern jeweils zwei sich diametral gegenüberliegende Vorsprünge (13, 14) aufweist und daß die Vorsprünge (13, 14) in entsprechende Aussparungen von zwei der Lagerbuchse (8) benachbarten Sicherungsscheiben (11) eingreifen.

4. Trommelförderer nach Ansprüchen 1 und 2, dadurch gekennzeichnet, daß die Lagerbuchse (8) mit Senkschrauben (17) auf dem Rechenrohr (1, 2, 7) angeschraubt ist.

5. Trommelförderer nach Ansprüchen 1 und 2, dadurch gekennzeichnet, daß die Lagerbuchse (8) mit Senkkerbstiften am Rechenrohr (1, 2, 7) befestigt ist.

6. Trommelförderer nach Ansprüchen 1 und 2, dadurch gekennzeichnet, daß die Lagerbuchse (8) über eine Spannkerbe am Rechenrohr (1, 2, 7) befestigt ist.

7. Trommelförderer nach Ansprüchen 1 und 2, dadurch gekennzeichnet, daß die Lagerbuchse (8) über einen Kerbstift (16) am Rechenrohr (1, 2, 7) befestigt ist.

8. Trommelförderer nach Ansprüchen 1 und 2, dadurch gekennzeichnet, daß die Lagerbuchse (8) über einen eingeschweißten Bolzen mit dem Rechenrohr (1, 2, 7) befestigt ist.

9. Trommelförderer nach Anspruch 1, dadurch gekennzeichnet, daß die Lagerbuchse (8) einseitig unter einen angeschweißten Ring (19) geschoben ist und mit einem Gewindestift (18) und einer Ringschneide am Rechenrohr (1, 2, 7) festgeschraubt ist.

10. Trommelförderer nach Anspruch 1, dadurch gekennzeichnet, daß die Lagerbuchse (8) an den Enden ausgeklinkt und nach innen gebogen ist und sich in einer Nut abstützt.

11. Trommelförderer nach Anspruch 1, dadurch gekennzeichnet, daß das Profil der Lagerbuchse (8) aus halbkreisförmigen Aussparungen (15) besteht und das Profil der Sicherungsscheibe (9) aus komplementären, halbkreisförmigen Vorsprüngen besteht.

**Claims**

1. A drum-type conveyor, in particular for self-loading harvest carts, which is provided at a conveying channel serving to receive stalk material and has a plurality of rake conveyors each of which comprises a rake pipe (1, 2, 7) and a plurality of conveying prongs (3, 4) firmly disposed thereon, said rake pipe (1, 2, 7) being mounted at both of its ends rotatably in a holding device (6) by means of a slide bearing divided in the center and comprising a bearing bush (8) disposed at the end of said rake pipe (1, 2, 7) and rotating therewith and comprising a bearing housing (10) firmly connected with said holding device (6), characterized in that said bearing bush (8) is provided along at least one edge with a profile, and in that beside the bearing a lock washer (9) is provided firmly connected with said rake pipe (7) and having a profile complementary to the profile of said bearing bush (8) so that there is a rotationally firm connection of said bearing bush (8) via said lock washer (9) with said rake pipe (7).

2. The drum-type conveyor according to claim 1, characterized in that the profiles of said bearing bush (8) and said lock washer (9) are interlocking tooth profiles.

3. The drum-type conveyor according to claim 1, characterized in that said bearing bush (8) has on both edges two diametrically opposite projections (13, 14) each and in that said projections (13, 14) engage corresponding recesses of two lock washers (11) adjacent to said bearing bush (8).

4. The drum-type conveyor according to claims 1 and 2, characterized in that said bearing bush (8) is screwed on said rake pipe (1, 2, 7) with countersunk screws (17).

5. The drum-type conveyor according to claims 1 and 2, characterized in that said bearing bush (8) is attached to said rake pipe (1, 2, 7) with countersunk head grooved pins.

6. The drum-type conveyor according to claims 1 and 2, characterized in that said bearing bush (8) is attached to said rake pipe (1, 2, 7) via a tension notch.

7. The drum-type conveyor according to claims 1 and 2, characterized in that said bearing bush (8) is attached to said rake pipe (1, 2, 7) via a grooved pin (16).

8. The drum-type conveyor according to claims 1 and 2, characterized in that said bearing bush (8) is attached to said rake pipe (1, 2, 7) via a welded in bolt.

9. The drum-type conveyor according to claim 1, characterized in that said bearing bush (8) is pushed on one side under a welded on ring (19) and screwed down on said rake pipe (1, 2, 7) with a setscrew (18) and a cup point.

10. The drum-type conveyor according to claim 1, characterized in that said bearing bush (8) is released and bent inwardly at the ends and is supported in a groove.

11. The drum-type conveyor according to claim 1, characterized in that the profile of said bearing bush (8) consists of semicircular recesses (15) and the profile of said lock washer (9) consists of complementary semicircular projections.

## Revendications

1. Convoyeur à tambour, en particulier pour véhicule de récolte auto-chargeur, prévu à la suite d'une goulotte d'acheminement et de réception de fourrage et présentant une pluralité de râteaux-transporteurs comprenant chacun un tube (1, 2, 7) et une pluralité de fourches (3, 4) fixées sur le tube, le tube (1, 2, 7) du râteau étant monté rotatif dans un support (6), à ses deux extrémités, au moyen d'un palier lisse partagé en son milieu, ce dernier comportant un coussinet (8) monté à l'extrémité du tube (1, 2, 7) et tournant avec lui, et comprenant un logenent (10) de palier monté fixe sur le support (6), caractérisé en ce que le coussinet (8) est pourvu d'un profilé sur au moins l'un de ses bords et en ce que, à côté du palier, est prévue une bague d'arrêt (9) fixée sur le tube (7) du râteau et qui présente un profilé complémentaire de celui du coussinet (8), de manière à obtenir une liaison rotative entre le coussinet (8) et le tube (7), par l'intermédiaire de la bague d'arrêt (9).

2. Convoyeur à tambour selon la revendication 1, caractérisé en ce que les profilés du coussinet (8) et de la bague d'arrêt (9) sont des dentures en prise l'une dans l'autre.

3. Convoyeur à tambour selon la revendication 1, caractérisé en ce que, sur chacun de ses bords, le coussinet (8) présente deux saillies (13, 14) diamètralement opposées et en ce que les saillies (13, 14) viennent en prise dans les évidements correspondants de deux bagues d'arrêt (11) adjacentes au coussinet (8).

4. Convoyeur à tambour selon les revendications 1 et 2, caractérisé en ce que le coussinet (8) est fixé sur le tube (1, 2, 7) du râteau par des vis à tête fraisée (17).

5. Convoyeur à tambour selon les revendications 1 et 2, caractérisé en ce que le coussinet (8) est fixé sur le tube (1, 2, 7) du râteau par des goupilles cannelées à tête conique.

6. Convoyeur à tambour selon les revendications 1 et 2, caractérisé en ce que le coussinet (8) est fixé sur le tube (1, 2, 7) du râteau par une broche de serrage.

7. Convoyeur à tambour selon les revendications 1 et 2, caractérisé en ce que le coussinet (8) est fixé sur le tube (1, 2, 7) du râteau par une goupille cannelée (16).

8. Convoyeur à tambour selon les revendications 1 et 2, caractérisé en ce que le coussinet (8) est fixé sur le tube (1, 2, 7) du râteau par un boulon soudé.

9. Convoyeur à tambour selon la revendication 1, caractérisé en ce que le coussinet (8) est déplacé d'un côté, sous un anneau soudé (19), puis est fixé sur le tube (1, 2, 7) du râteau au moyen d'une vis sans tête (18) à cuvette.

10. Convoyeur à tambour selon la revendication 1, caractérisé en ce que le coussinet (8) est encoché à ses extrémités, recourbé vers l'intérieur et prend appui dans une rainure.

11. Convoyeur à tambour selon la revendication 1, caractérisé en ce que le bord du coussinet (8) comprend des évidements (15) en forme de demi-cercle et le bord de la bague d'arrêt (9) comprend des saillies complémentaires en forne de demi-cercle.

Fig. 1

Fig. 2

Fig. 4

Fig. 3

Fig. 5

Fig. 6

Fig. 7

Fig. 8

Fig. 9